# EUROPEAN PATENT APPLICATION

(11) **EP 3 131 186 A1**
(43) Date of publication of application: **15.02.2017**
(21) Application number: 15182507.2
(22) Date of filing: 26.08.2015
(51) Int. Cl.: H02K 7/08

(54) **ELECTRIC MOTOR**

(30) Priority: 13.08.2015 PL 41355915
(71) Applicant: Akademia Gorniczo-Hutnicza im. Stanislawa Staszica w Krakowie, 30-059 Krakow (PL)
(72) Inventor: PRUSAK, Daniel, 31-621 Kraków (PL)
(74) Representative: Wlasienko, Jozef

(57) **Abstract**

Electric motor (10) according to the invention is characterized in that the rotor (5) is in the form of a ring with a central opening (11) and it is positioned on support rollers (1) rotationally mounted in yokes (2), one end of which is pivotally mounted in a housing (6) of the stator (27) around the rotor (5) so that the outer part of the rotor (5) constitutes a raceway (28) for the support rollers (1), wherein the cores (17) of the windings (4) and the rotor (5) are replaceable, autonomous mechanical parts.

## Description

### Field of the invention

The present invention relates to an electric motor, and, in particular, to a Permanent Magnet Synchronous Motor (PMSM), also known as a direct drive motor.

### Background of the invention

There are known electric motors whose operation is based on utilization of a magnetic coupling occurring between windings through which an electric current flows, the current inducing magnetic field, and permanent magnets having suitably selected polarity. In some designs known from the prior art an outer stator comprising windings and an internal rotor are used, the internal rotor having permanent magnets on its circumference and being mounted on a central shaft, wherein the rotor motion occurs synchronously with the stimulation of windings. Such motors known from the prior art are often referred to as Permanent Magnet Synchronous Motors (PMSM) or Direct Drive Motors.

US patent application No. 2014/0300217 discloses a low inertia direct drive motor comprising a circular outer stator, a circular inner stator and a ring of plurality of magnets. The ring of magnets is positioned between the circular outer stator and the circular inner stator so that it is separated by an air gap. The circular outer stator and the circular inner stator each have a plurality of teeth with coils wound around the teeth.

Known motor designs have fixed, heavy elements which are non-replaceable parts, and operate in closed housings which makes the change of operation parameters difficult or impossible. Furthermore, it is difficult to use such motors in compact structures which often require motors to be used in a small space, or to place some parts through the motor or minimize the weight of the structure.

It is an object of the present invention to provide an electric motor having compact size and simple design that eliminates the central shaft and allows parts of the motor to be easily replaced in order to freely determine its operation parameters.

### Summary of the invention

Electric motor according to the invention is characterized in that the rotor is in the form of a ring with a central opening and it is positioned on support rollers rotationally mounted in yokes, one end of which is pivotally mounted in a housing of the stator around the rotor so that the outer part of the rotor constitutes a raceway for the support rollers, wherein the cores of the windings and the rotor are replaceable, autonomous mechanical parts.

Preferably, the yokes have their arms engaged with set screws screwed into holes of the housing.

Preferably, the yokes are resiliently mounted in the housing.

Preferably, the rotor consists of separable layers.

Preferably, in the central opening between the separable layers of the rotor a plate is inserted.

Preferably, plate is transparent.

Preferably, plate includes mounting elements.

Preferably, housing has polygonal shape and flat profile, wherein windings are wound around the cores arranged in corners of the housing of the stator.

Preferably, a controller of the motor and/or an encoder and/or a power stage are arranged in the housing.

### Advantageous effects of the invention

The main advantage of the motor according to the present invention is eliminating the central shaft which could make it impossible to freely arrange an internal space of the motor. A relatively large area inside the rotor obtained in this way may be freely used depending on the application. The presented design of the motor also provides a number of advantages during an operation of the motor such as high torque due to the capability of using the rotor having a large diameter, easy scalability of dimensions, high accuracy of the motion, reliability of operation or no maintenance requirements resulting from lack of lubrication.

With a simple, compact design and a small number of moving parts it is easy to replace parts of the motor and integrate a drive system, a control system and a power stage in one compact housing. The design of the motor also allows to apply a control from an outer drive controller or apply a wireless drive control (e.g. by means of Bluetooth technology) from any device in the vicinity, e.g. from a smartphone. Moreover, the motor allows to obtain a high proportion between technical parameters e.g. torque, precision in comparison to overall dimensions and the volume of the motor. The motor design makes it possible to stack up a number motors and repeatedly increase torque.

### Brief description of the drawings

Some embodiments of the invention are presented in the drawing, in which:
Fig.1 shows a scheme of the structure of an electric motor;
Fig. 2 shows a portion of the structure of the electric motor from Fig. 1 illustrating a rotor in a section view and a portion of the rotor alone in a side view;
Fig. 3 shows a portion of the structure of the rotor in Fig. 2 in a partial section view;
Fig. 4 shows a portion of the structure of the rotor in Fig. 2 in an axonometric view according to another embodiment of the invention;
Fig. 5 shows an axonometric view of a yoke, and
Fig. 6 shows an external view of the motor with a housing cover and a rotor cover closed in a top view and in a side view.

### Embodiments of the invention

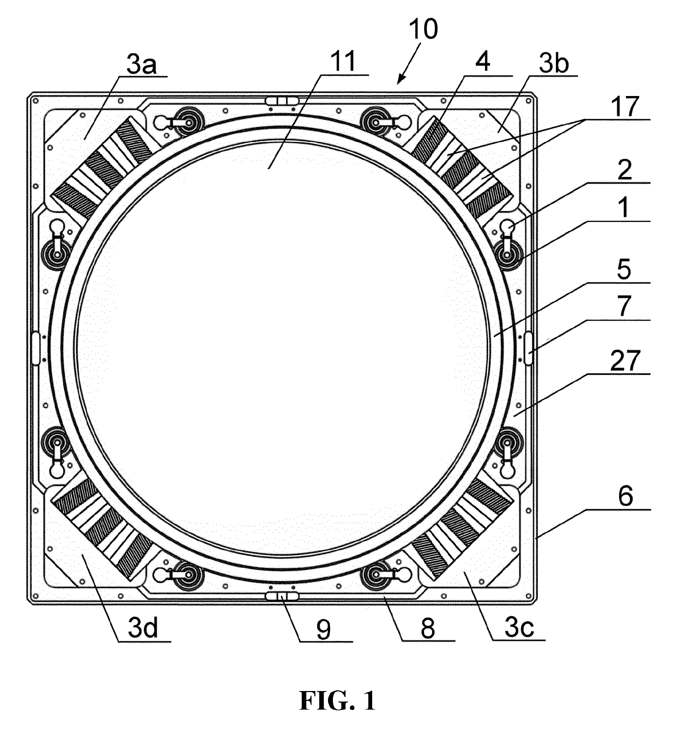

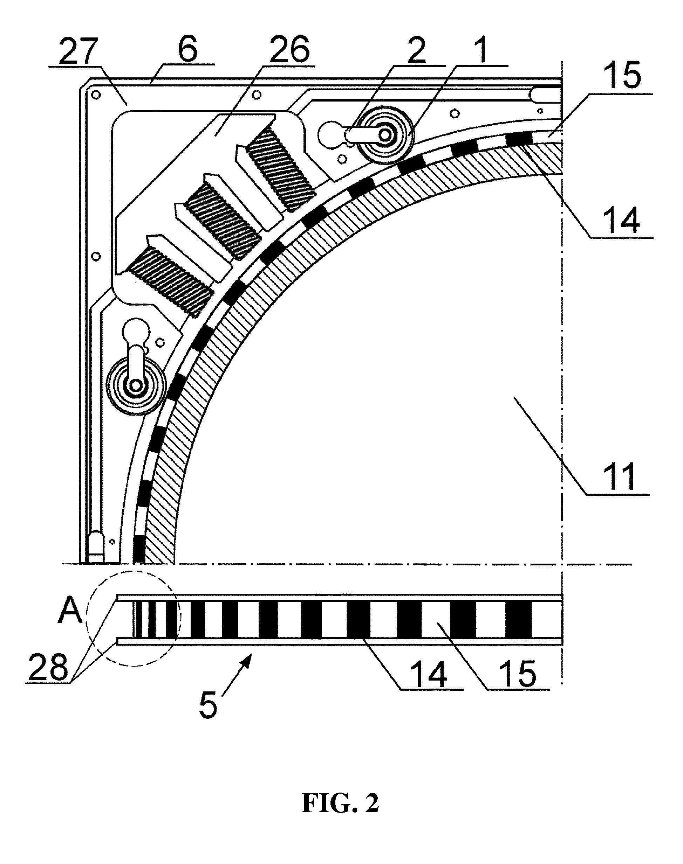

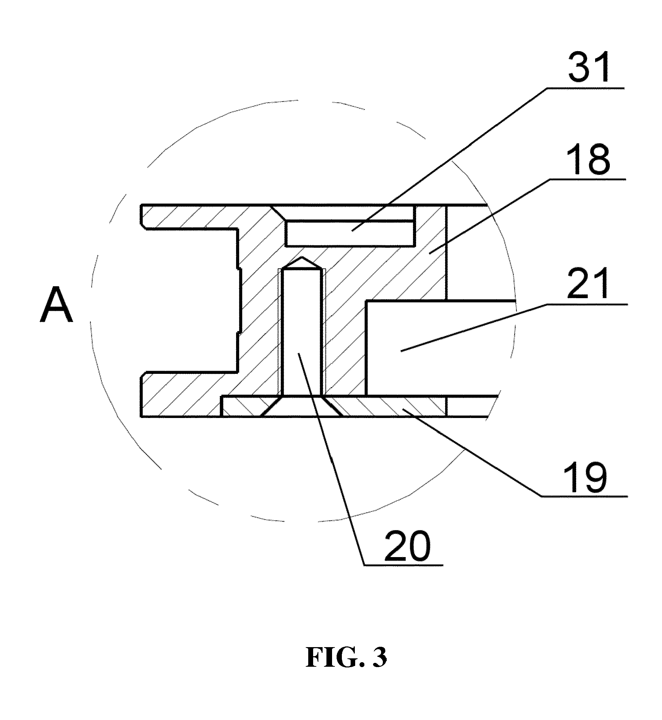

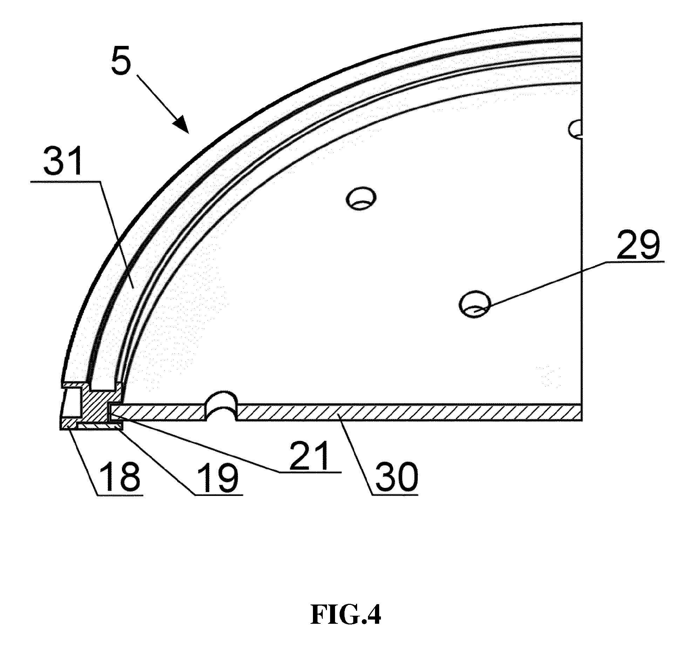

Fig. 1 shows a scheme of the structure of an electric motor 10 in accordance with an embodiment of the invention. The electric motor 10 comprises an outer stator 27 arranged in a rectangular housing 6. The stator 27 comprises cores 17 made of transformer plate arranged in four corners of the housing 6. Windings 4 are wound around the cores 17, wherein in the presented embodiment of the invention in each corner of the housing 6 three windings 4 are positioned. The cores 17 are mechanical, autonomous parts which in the present embodiment of the invention form a comb 26 (shown in Fig. 2, and partially shown in Fig. 1) having dimensions fitted to the corners of the housing, the cores 17 being attached to housing 6 by covers 3a, 3b, 3c and 3d respectively, preferably made of plastic. In such an arrangement it is possible to freely choose the number of cores, and in consequence also the number of windings in the corners of the housing 6, by placing the combs 26 having a different number of cores. In the presented embodiment, three out of five available cores in each corner are utilized, however, in an alternative embodiment (not shown) there are utilized five windings wound around every available core in each corner of the stator 27 or different number of cores and windings. In the embodiment shown in Fig. 1, individual windings 4 are connected in series to each other and form three separate circuits such that all the first windings 4 from each corner, in a clockwise direction, form a first serial circuit, all the middle (second) windings 4 in each corner form a second serial circuit, and all the last (third) windings 4 in each corner form a third serial circuit respectively. The windings 4 in every of the serial circuits are connected by means of wire bundles (not shown) inserted into wire ducts 8 and led outside through a socket 9. By sequentially providing current signals in each circuit successively, the respective windings 4 in each corner are stimulated on a rotational basis and a rotating magnetic field is induced that interacts with permanent magnets of the rotor 5 having suitable polarities and causes a rotational motion of the rotor 5 synchronously with the rotating magnetic field. The rotor 5 is an internal, narrow ring having a large central opening 11, the rotor 5 being positioned on support rollers 1 mounted in yokes 2. The rotor 5 is made of aluminum or steel. In alternative embodiments of the invention (not shown) a housing has a hexagonal shape or another polygonal shape, wherein in each corner of the housing a space is provided for inserting cores. It should be noted that it is sufficient to provide windings only in one corner of the housing to ensure a correct operation of the electric motor 10, wherein increasing the number of windings is depended on the required torque and the demanded number of steps of the rotor 5 per one complete rotation. Moreover, the housing 6 comprises external connection sockets 7 that allow introducing additional wires to the motor housing 6 in order to apply an encoder for precise position determination of the rotor 5, as well as additional components such as an internal controller that controls the stimulation of the windings 4, or a power stage, which components, in alternative embodiments, are integrated into the housing 6. The construction and operation of such components is well known to an ordinary skilled person, therefore they will not be further explained here. To apply the encoder (not shown) it is required to place an optical transmitter-receiver system in the housing 6, between its corners and in the middle of each side, and add a strip (not shown) on the edge of the rotor 5 (in a prepared recess 31, shown in Fig. 3 and 4), which strip is made of, e.g., a foil, having deposited alternate areas that reflect and absorb light radiating from the optical transmitter. The reflected light is detected by the optical receiver and converted into an electric signal that allows reading information concerning a position and a motion of the rotor 5. It should be noted that, in the presented embodiment of the invention, four encoders may be used which allows a very precise position determination of the rotor 5. When the encoder (encoders) is (are) used, its wires run along ducts 8 to reach controllers placed in the corners of the housing 6, or the wires are led outside the housing 6 to external controllers.

A detailed structure of the rotor 5 is illustrated in Fig. 2 showing a portion of the structure of the electric motor 10 shown in Fig. 1 with the cover 3a removed and the rotor 5 illustrated in a section view. Fig. 2 shows also a portion of the rotor 5 alone in a side view. The rotor 5 is mounted inside the stator 27 and it is constructed in such a way that its outer portion constitutes a raceway 28 for the support rollers 1 (eight rollers in this example) which are mounted in the yokes 2 on a rotational basis, wherein the yokes 2 are pivotally mounted in the housing 6 of the stator 27. The support rollers 1 preferably are made of high endurance plastic, e.g. polyamide. At a circumference of the rotor a strip is provided which comprises alternately placed N-type magnets 14 and S-type magnets 15. The magnets 14, 15 and the support rollers 1 pass each other without any collision during a motion of the rotor 5. In the presented embodiment of the invention, the total number of pole pairs is 48 which in the case of polar control allows to obtain 144 magnetic steps per one complete rotation. The number of magnetic steps is scalable and depends on the value of perimeter of the rotor 5, on the number of magnets used at the circumference of the rotor 5 and on the number of the utilized windings 4. By providing an adequately high proportion of a ring diameter of the rotor 5 in relation to dimensions of the housing 6, a large empty space is obtained inside the rotor 5 that forms the central opening 11 which can be freely used depending on the application. In Fig. 2 a portion of the rotor 5 is showed in a side view that illustrate a rotor profile which has upper and lower edges. Those edges form flat rings that constitute the raceway 28 for the support rollers 1, wherein the perimeter of the raceway 28 is larger than the one of the strip comprising the magnets 14, 15. The shape of the support rollers 1 is adapted to the profile of the rotor 5 such that edges of the rollers 1 are supported on the raceway 28. Middle portions of the rollers 1 have a larger diameter and they are located between the rings of the raceway 28. It provides a stable supporting and maintaining the rotor 5 on the rollers 1 inside the housing of the motor 10. The cores form a comb 26 having a shape adapted to the corner of the housing, wherein the comb 26, as the rotor 5, is an autonomous and replaceable mechanical part of the electric motor 10. Such a modular design of the motor allows fast replacing of the motor parts, e.g. placing combs in the corners of the housing 6 that have a desired number of cores and windings as well as adapting the rotor, for example such that it comprises a larger number of the pole pairs. This makes it possible to freely set parameters of the motor, among others, a torque and a number of magnetic steps per one complete rotation. Fig. 3 shows a portion of the structure of the rotor in Fig. 2 in a partial section view. The rotor is composed of two ring layers 18, 19 made of stainless steel which are coaxially assembled in a detachable way by means of screws (not shown) screwed into mounting holes 20 provided in the layers 18 and 19 of the rotor. The layer 18 of the rotor has a recess 21 that is provided for inserting a circular plate filling the recess such that the plate is clamped between the layers 18 and 19 of the rotor and fills the central opening. The upper layer 18 has a recess 31 provided for inserting the above-described encoder strip.

In another embodiment of the invention presented in Fig. 4, between the layers 18, 19 of the rotor 5, in the recess 21, a plate 30 is inserted. Preferably, the plate 30 is transparent and it is made of polycarbonate. The plate fills the central opening and includes mounting holes 29 provided for fastening mounting elements (not shown), for example mounting screws screwed into the mounting holes 29. The motion of the rotor 5 rotates the plate 30. The plate 30 can have some components (required for a given application of the motor) mounted to it by means of said mounting elements. A plate disassembly allows to use the motor in arrangements that for design reasons require providing an opening throughout the rotor. In alternative embodiments (not shown) between the layers 18 and 19 a plate made of other material is inserted, e.g. made of aluminum and having other arrangement of holes and/or other shape, depending on the requirements for the application of the electric motor 10. In further alternative embodiments of the invention (not shown) a latticework, a holder or any other component may by inserted between the layers 18 and 19 which is arranged for mounting structure elements that are to be moved by a rotation of the rotor 5. The transparent plate 30 makes it possible, among other things, to mount components that have to be observed from different sides.

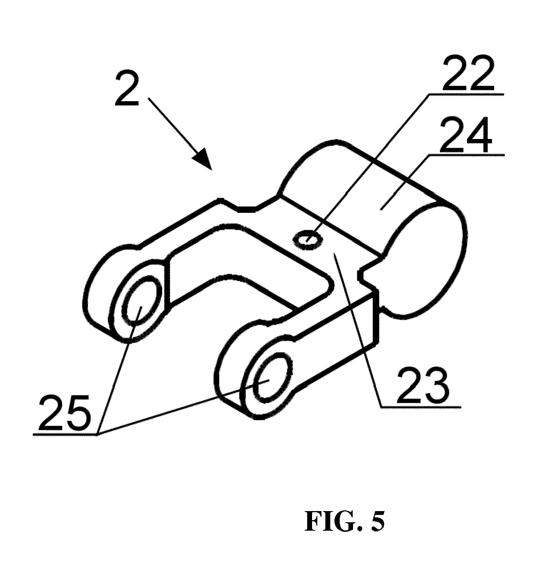

Fig. 5 shows an axonometric view of the yoke 2 which is utilized in the above-described embodiment of the invention illustrated in Fig. 1. The yoke 2 consists of a cylinder 24 and an arm 23. The cylinder 24 of the yoke 2 is inserted in a recess of the housing 6 illustrated in Fig. 1 in such a way that it is possible to rotate the cylinder 24 about its axis. The arm 23 of the yoke 2 comprises a fork including mounting holes 25, wherein the mounting holes 25 hold a mandrel (not shown) on which the support roller 1 (illustrated in Fig. 1 and in Fig. 2) is rotationally mounted. The said support roller 1 comprises an inner bearing (not shown) allowing free rotation. The turn of the arm 23 around the cylinder 24 of yoke 2 allows for adjustment of the support roller position 1 in relation to the rotor 5. Changing the position of the yoke 2 in relation to the rotor 5 enables assembly and disassembly of the rotor 5 as well as provides the desired pressing of the rollers 1 against the raceway 28 of the rotor 5 with the use of set screws screwed into the housing and pressing the yoke 2, at a fixing socket 22, against the rotor 5.

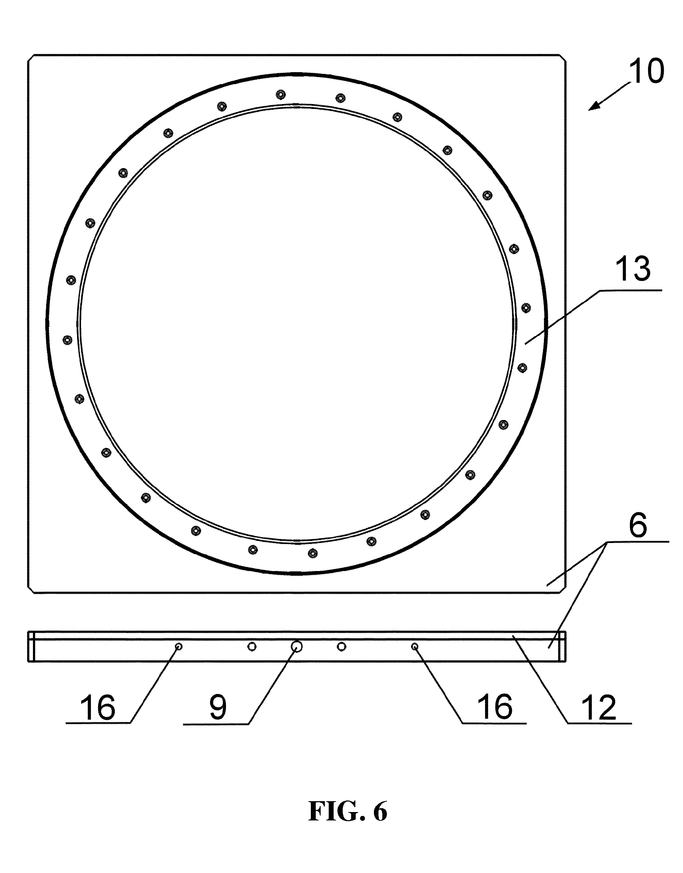

Fig. 6 shows an external view of the motor 10 with a housing cover 12 of the housing 6 of the stator and a rotor cover 13, both closed, in a top view and in a side view. The cover 12 and the cover 13 protect internal components of the motor 10 and the motor 10 itself from external conditions. The cover 12 is adapted to the housing 6 in such a way that the body of the motor 10 has a flat profile. Preferably, the cover 13 is made of aluminum but in alternative embodiments (not shown) covers made of other non-magnetic materials are used that will not interfere with the magnetic flux. The rotor 5 has a large diameter in relation to overall dimensions of the motor 10. In the side portions of the housing 6 holes 16 for screwing set screws (not shown) are provided. As the set screws are being screwed, their displacement enables pressing the arms of the yokes 2 towards the rotor 5, as it was explained in relation to Fig. 5. It enables adjusting an initial tension of the support rollers 1 against the rotor 5. In another embodiments of the invention (not shown) the yokes 2 are resiliently mounted in the housing 6, for example, with the use of resilient elements between the set screws and the arms of the yokes 2 that interact resiliently with the yoke arms towards the rotor 5. In yet another embodiments of the invention (not shown) the yokes 2 are resiliently mounted independently of the set screws with the use of resilient elements such as pressure springs, tension springs or elements made of flexible polymers. In the figure sockets 9 for leading out wires are also illustrated.

### Industrial Application

The electric motor according to the invention is widely used in many branches of industry, particularly in industrial automation and robotics, automotive industry and systems that require high precision and accuracy as for example medical equipment, precise feeding mechanisms as well as computer and electronic components.

### Reference Numerals List:

- 1: support roller
- 2: yoke
- 3a: core cover
- 3b: core cover
- 3c: core cover
- 3d: core cover
- 4: winding
- 5: rotor
- 6: housing
- 7: external connection socket
- 8: wire duct
- 9: socket for leading out wires
- 10: motor
- 11: central opening
- 12: cover of the stator housing
- 13: rotor cover
- 14: N-type magnet
- 15: S-type magnet
- 16: Holes for adjusting an initial tension of the support rollers
- 17: Core
- 18: Rotor layer
- 19: Rotor layer
- 20: Mounting hole
- 21: Recess
- 22: Fixing socket
- 23: Arm
- 24: Cylinder
- 25: Mounting holes
- 26: Comb
- 27: Stator
- 28: Rotor raceway
- 29: Mounting holes
- 30: Plate
- 31: Recess for encoder strip

## Claims

1. An electric motor comprising an outer stator having windings wound around cores and a rotor arranged inside the stator, the rotor having permanent magnets of alternate polarities arranged symmetrically on its circumference, **characterized in that** the rotor (5) is in the form of a ring with a central opening (11) and it is positioned on support rollers (1) rotationally mounted in yokes (2), one end of which is pivotally mounted in a housing (6) of the stator (27) around the rotor (5) so that the outer part of the rotor (5) constitutes a raceway (28) for the support rollers (1), wherein the cores (17) of the windings (4) and the rotor (5) are replaceable, autonomous mechanical parts.

2. The electric motor according to claim 1, **characterized in that** the yokes (2) have their arms (23) engaged with set screws screwed into holes (16) of the housing.

3. The electric motor according to any of the preceding claims, **characterized in that** the yokes (2) are resiliently mounted in the housing (6).

4. The electric motor according to any of the preceding claims, **characterized in that** the rotor (5) consists of separable layers (18, 19).

5. The electric motor according to claim 4, **characterized in that** in the central opening (11) between the separable layers (18, 19) of the rotor (5) a plate (30) is inserted.

6. The electric motor according to claim 5, **characterized in that** the plate (30) is transparent.

7. The electric motor according to claim 5 or 6, **characterized in that** plate (30) includes mounting elements.

8. The electric motor according to any of the preceding claims, **characterized in that** the housing (6) has polygonal shape and flat profile, wherein windings (4) are wound around the cores (17) arranged in corners of the housing (6) of the stator.

9. The electric motor according to any of the preceding claims, **characterized in that** a controller of the motor and/or an encoder and/or a power stage are arranged in the housing (6).
